# EUROPÄISCHE PATENTSCHRIFT

(11) **EP 3 196 607 B1**
(45) Veröffentlichungstag und Bekanntmachung des Hinweises auf die Patenterteilung: **04.03.2020**
(21) Anmeldenummer: 16152505.0
(22) Anmeldetag: 25.01.2016
(51) Int. Cl.: G01F 23/288

(54) **RADIOMETRISCHES PROZESSMESSSYSTEM**
RADIOMETRIC PROCESS MEASUREMENT SYSTEM
SYSTEME DE MESURE DE PROCESSUS RADIOMETRIQUE

(43) Veröffentlichungstag der Anmeldung: 26.07.2017
(73) Patentinhaber: Berthold Technologies GmbH & Co. KG, 75323 Bad Wildbad (DE)
(72) Erfinder: Müller, Dr. Steffen, 75173 Pforzheim (DE)
(74) Vertreter: Patentanwälte Ruff, Wilhelm, Beier, Dauster & Partner mbB

(56) Entgegenhaltungen:
- EP-A2- 2 048 483
- DE-A1-102011 085 943
- US-A- 5 564 487
- US-A1- 2006 192 126

## Beschreibung

### ANWENDUNGSGEBIET UND STAND DER TECHNIK

Die Erfindung betrifft ein Prozessmesssystem zur radiometrischen Messung mindestens einer Prozessgröße mittels einer Messung ionisierender Strahlung gemäß dem Oberbegriff von Anspruch 1.

Radiometrische Prozessmesssysteme werden seit vielen Jahren erfolgreich in der industriellen Prozessmesstechnik eingesetzt, um berührungslos Prozessgrößen wie beispielsweise Füllstand eines Mediums, Dichte eines Mediums, Konzentration eines Mediums oder Grenzstand eines Mediums zu messen.

Bei einer typischen Messanordnung zur Durchführung einer Gamma-Absorptionsmessung wird auf einer Seite eines Behälters oder eines Rohres eine Strahlenquelle mit mindestens einem radioaktiven Strahler angebracht, der u.a. Gammastrahlung abstrahlt. Auf der anderen Seite des Behälters oder Rohres befindet sich ein als Szintillationsdetektor dienender Stabdetektor, der ein stabförmiges Szintillatorelement aufweist, das sich wenigstens über einen Teil der Höhe des Behälters bzw. Länge eine Rohres erstrecken kann. Das stabförmige Szintillatorelement wird in dieser Anmeldung auch als Szintillatorstab bezeichnet.

Ein Szintillatorstab hat eine langgestreckte, in der Regel kreiszylindrische Gestalt und leitet einen Anteil des Szintillationslicht, welches bei Einstrahlung ionisierender Strahlung entlang der aktiven Länge des Szintillatorstabs entsteht, nach Art eines Lichtleiters im Inneren des Szintillatorstabs direkt und/oder durch gegebenenfalls mehrfache Totalreflexion an der Mantelfläche des Szintillatorstabs in Richtung einer Stirnfläche, an der das Szintillationslicht aus dem Szintillatorstab austritt.

Dem Szintillatorstab ist eine Sensoreinheit mit mindestens einem Photosensor zur Umwandlung von aus der Stirnfläche ausgetretenem Szintillationslicht in elektrische Signale zugeordnet. Der Sensorelektronik ist ein Auswertegerät nachgeschaltet. In der Regel ist der Szintillatorstab aus Gründen der mechanischen Stabilität und des Schutzes von einem metallischen Hüllrohr umgeben. Dieses dient auch der lichtdichten Kapselung.

Im Gebrauchsmuster DE 201 03 881 U1 wird ein Stabdetektor beschrieben, bei dem der strahlungsempfindliche Teil aus mehreren Szintillatorstäben besteht, die aufeinander gesetzt und optisch gekoppelt sind und an einem Ende von einem einzigen Photosensor in Form eines Photomultipliers ausgelesen werden. Der Photomultiplier ist über eine planparallele Trennscheibe an die Stirnfläche des nächstliegenden Szintillatorstabs optisch angekoppelt. Die mit einer Photokathodenschicht versehene aktive Fläche des Photomultipliers ist im Wesentlichen so groß wie die Querschnittsfläche des kreiszylindrischen Szintillatorstabs, so dass das komplette aus der Stirnfläche austretende Szintillationslicht in den Photomultiplier gelangen und gezählt werden kann. Bei dieser Anordnung wird unter anderem ausgenutzt, dass Photomultiplier eine relativ große aktive Fläche mit wenig Eigenrauschen verbinden. Dadurch kann eine hohe Empfindlichkeit erzielt werden. Auf Röhrentechnik basierende Photomultiplier sind für den Einsatz in rauer Umgebung nur bedingt geeignet.

Es gibt auch Prozessmesssysteme, bei denen anstelle eines Photomultipliers, der auf Röhrentechnologie basiert, eine auf Halbleitertechnik basierende Photodiode oder ein Photodiodenarray mit einer Vielzahl von Photodioden zur Erfassung des Szintillationslichts verwendet wird (z.B. EP 2 194 362 A1).

In der DE 10 2013 216 197 A1 wird ein radiometrisches Messsystem beschrieben, das einen Silizium-Photomultiplier zum Erzeugen eines lichtintensitätsabhängigen Messsignals verwendet.

US 2006/192126 A1, US 5 564 487 A und EP 2 048 483 A2 offenbaren jeweils ein Prozessmesssystem zur radiometrischen Messung einer Prozessgröße.

Photodioden und Silizium-Photomultiplier erscheinen für manche Anwendungen mit rauer Umgebung besser geeignet als auf Röhrentechnik basierende Photomultiplier, sind jedoch derzeit nur mit relativ kleiner aktiver Fläche wirtschaftlich herstellbar.

### AUFGABE UND LÖSUNG

Es ist eine Aufgabe der Erfindung, ein gattungsgemäßes Prozessmesssystem bereitzustellen, das wirtschaftlich herstellbar ist, bei Bedarf in rauer Umgebung eingesetzt werden kann und ein günstiges Signal-Rausch-Verhältnis aufweist.

Diese Aufgabe wird gelöst durch ein Prozessmesssystem mit den Merkmalen von Anspruch 1. Bevorzugte Weiterbildungen sind in den abhängigen Ansprüchen angegeben. Der Wortlaut sämtlicher Ansprüche wird durch Bezugnahme zum Inhalt der Beschreibung gemacht.

Der Erfindung liegen unter anderem die folgenden Überlegungen zugrunde. Bei Szintillationsdetektoren wird das Signal-Rausch-Verhältnis (S/N ratio) unter anderem davon bestimmt, wieviel Szintillationslicht detektiert wird. Je mehr Szintillationslicht auf einen Photosensor fällt, desto besser wird in der Regel das Signal-Rausch-Verhältnis. Daher wäre es theoretisch am besten, die komplette Szintillatoroberfläche photosensitiv auszuführen. Allerdings würde dies die Kosten erhöhen und auch den mechanischen Aufbau von Szintillationsdetektoren verkomplizieren. Üblicherweise wird der Szintillator daher nur an einer Fläche mit einem Photosensor versehen, während die restliche Szintillatoroberfläche reflektierend ausgeführt wird, damit Szintillationslicht so lange im Szintillator reflektiert wird, bis es auf einen Photosensor trifft.

Je größer die photosensitive Fläche im Verhältnis zur Gesamtoberfläche ist, desto mehr Licht wird detektiert, ohne dass es reflektiert werden muss. Das reflektierte Licht legt einen längeren Pfad im Szintillatormaterial zurück als das direkt detektierte. Damit erhöht sich auch die Wahrscheinlichkeit, dass das Licht bereits im Szintillator absorbiert wird, bevor es auf den Photosensor trifft. Bei in einer Vorzugsrichtung ausgedehnten Detektoren, wie z.B. Stabdetektoren, wird daher kaum noch reflektiertes Licht detektiert, sondern nur solches, welches bereits in Richtung Photosensor transportiert wird. Verfehlt dieses Licht den Photosensor, kann es zwar ggf. zurückreflektiert werden, jedoch wäre der zurücklegende Weg mindestens doppelt so lang wir der Szintillatorstab, bis das Licht wieder auf den Photosensor treffen kann. Die Wahrscheinlichkeit, dass das Licht im Szintillator absorbiert wird, ist dadurch sehr hoch. Dieses Licht kann daher nicht mehr signifikant zum Signal beitragen.

Aus diesem Grunde sollte möglichst viel Szintillationslicht auf direktem Wege gesammelt werden. Dies könnte durch Verwendung eines einzelnen Photosensors mit einer großen aktiven Fläche oder durch die Verwendung mehrerer Photosensoren, ggf. jeweils mit kleinerer aktiver Fläche, gelöst werden. Die Verwendung einer größeren Anzahl von Photosensoren ist normalerweise mit erhöhten Kosten für Photosensoren verbunden. Weitere Probleme, die sich durch eine größere Anzahl von Photosensoren ergeben, sind ein höherer Energieverbrauch und eventuell eine längere Pulsform, z.B. durch parasitäre Kapazitäten. Außerdem steigt tendenziell das absolute Rauschen mit der Anzahl der Photosensoren und/oder der Größe der aktiven Fläche.

Diese Probleme lassen sich gemäß der beanspruchten Erfindung vermeiden oder vermindern, indem mithilfe der optischen Lichtkonzentrationseinrichtung eine Konzentration des Szintillationslichtes von einer relativ größeren mittleren lichtführenden Querschnittsfläche des Szintillatorstabs auf eine im Vergleich dazu kleinere aktive Fläche einer Sensoreinheit erfolgt.

Die Sensoreinheit kann einen einzigen Photosensor aufweisen. Dann entspricht die aktive Fläche der Sensoreinheit der aktiven Fläche des Photosensors. Wenn die Sensoreinheit zwei oder mehr Photosensoren aufweist, die jeweils eine aktive Fläche haben, so entspricht die aktive Fläche der Sensoreinheit der Gesamtheit bzw. der Summe der aktiven Flächen der einzelnen Photosensoren.

Ein Szintillatorstab ist ein in einer Vorzugsrichtung (Längsrichtung) ausgedehntes Szintillatorelement mit einer in Längsrichtung gemessenen Länge, die deutlich größer ist als eine senkrecht zur Längsrichtung gemessene maximale Querdimension, z.B. als der Durchmesser. Das Aspektverhältnis zwischen Länge und maximaler Querdimension kann z.B. zwischen 2 und 200 liegen. Häufig hat der Szintillatorstab über einen überwiegenden Teil seiner Länge oder die gesamte Länge eine kreiszylindrische Gestalt und somit eine kreisrunde Querschnittsfläche. Auch andere Querschnittsformen sind möglich, z.B. eine ovale Querschnittsform oder eine polygonale Querschnittsform, z.B. eine quadratische Querschnittsform oder eine andere rechteckige Querschnittsform.

Eine optische Lichtkonzentrationseinrichtung kann so ausgestaltet sein, dass sie mit möglichst wenig Intensitätsverlust den lichtführenden Querschnitt so verkleinert, dass Szintillationslicht in Richtung der aktiven Fläche der Sensoreinheit konzentriert wird, so dass ein hoher Anteil des Szintillationslichts zur aktiven Fläche der Sensoreinheit gelangt und nur ein geringer Anteil oder kein Szintillationslicht für die Messung ungenutzt bleibt. Bei manchen Ausführungsformen werden kleinflächige Sensoreinheiten eingesetzt, deren aktive Fläche weniger als 60% der mittleren lichtführenden Querschnittsfläche des Szintillatorstabs beträgt, wobei es auch möglich ist, dass die aktive Fläche der Sensoreinheit weniger als 50% oder weniger als 40% oder weniger als 30% der mittleren lichtführenden Querschnittsfläche des Szintillatorstabs beträgt.

Manche Ausführungsformen, die nicht Teil dieser Erfindung sind, zeichnen sich dadurch aus, dass die optische Lichtkonzentrationseinrichtung eine nichtabbildende Optik aufweist. Damit kann unter Verringerung des lichtführenden Querschnitts die Ausleuchtung der aktiven Fläche der Sensoreinheit mit Szintillationslicht optimiert werden. Eine nicht abbildende Optik zeichnet sich unter anderem dadurch aus, dass Szintillationslicht, welches von ein und demselben Punkt des Szintillatorstabs ausgeht, auf unterschiedliche Punkte des definierten Bereichs gelenkt werden kann, in welchem die aktive Fläche liegt. Hierdurch kann eine effiziente Konzentration von Szintillationslicht auf die aktive Fläche der Sensoreinheit erreicht werden.

Erfindungsgemäß weist die optische Lichtkonzentrationseinrichtung eine parabolische Lichtsammellinse auf. Hierunter wird insbesondere eine nichtabbildende optische Komponente verstanden, die in der Lage ist, Lichtstrahlen, welche auf eine virtuelle oder tatsächliche vorliegende Eintrittsfläche mit einem ersten Durchmesser unter einem maximalen Einfallswinkel eintreten, auf eine kleinere Fläche eines zweiten Durchmessers zu konzentrieren, wobei Lichtstrahlen, die unter einem größeren Einfallswinkel als dem maximalen Einfallswinkel eintreffen, wieder zurückreflektiert werden. Der maximale Einfallswinkel wird auch als Akzeptanzwinkel bezeichnet.

Die parabolische Lichtsammellinse kann mittels Formgebung und/oder Materialwahl so ausgelegt sein, dass ihre Mantelfläche für Szintillationslicht totalreflektierend wirkt. Die Mantelfläche kann auch verspiegelt sein. Auch ein parabolischer Hohlspiegel kann als optische Lichtkonzentrationseinrichtung verwendet werden.

Für die Verwendung einer parabolischen Lichtsammellinse in Kombination mit einem Szintillatorstab hat es sich als günstig herausgestellt, wenn eine Mantelfläche der parabolischen Lichtsammellinse derart gestaltet ist, dass ein maximaler Akzeptanzwinkel Θₘₐₓ der parabolischen Lichtsammellinse an einem kritischen Winkel Θₖᵣᵢₜ der Totalreflexion innerhalb des Szintillatorstabs derart angepasst ist, dass die Bedingung Θₘₐₓ ≥ 90° - Θₖᵣᵢₜ gilt. In diesem Fall können theoretisch alle Lichtstrahlen, die unter Totalreflexion innerhalb des Szintillatorstabs in Richtung Stirnfläche transportiert werden, auf die kleinere Fläche mit zweitem Durchmesser konzentriert werden. Die zugehörige Sensoreinheit kann so ausgelegt sein, dass ihre aktive Fläche mehr als 50% oder mehr als 60% oder mehr als 70% oder mehr als 80% oder mehr als 90% der im Bereich des kleineren Durchmessers aus der parabolischen Lichtsammellinse austretenden Lichtstrahlen erfassen kann.

Bei der Auslegung der parabolischen Lichtsammellinse, insbesondere bei der Gestaltung der Mantelfläche der parabolischen Lichtsammellinse sowie bei der Auslegung der Durchmesser auf der Eintrittsseite und der Austrittsseite, hat es sich im Hinblick auf typische Dimensionen von Szintillatorstäben als vorteilhaft herausgestellt, wenn die parabolische Lichtsammellinse eine Eintrittsfläche mit einem Eintrittsdurchmesser d₁ und eine der aktiven Fläche zugewandte Austrittsfläche mit einem Austrittsdurchmesser d₂ < d₁ aufweist, wobei für ein Konzentrationsverhältnis C = d₁²/d₂² die Bedingung 1.5 < C < 5 gilt.

Die parabolische Lichtsammellinse ist bei manchen Ausführungsformen aus einem anderen für Szintillationslicht transparenten Material gefertigt als der Szintillatorstab. Hierdurch ergibt sich eine gewisse Freiheit bezüglich der Materialauswahl zur Optimierung der Lichtsammelfunktion. Insbesondere ist es nicht erforderlich, dass das Material der parabolischen Lichtsammellinse ein Szintillatormaterial ist.

Bei einer Weiterbildung ist vorgesehen, dass die parabolische Lichtsammellinse aus einem Szintillatormaterial besteht, wobei es sich insbesondere um das gleiche Szintillatormaterial handeln kann, das auch für den Szintillatorstab verwendet wird. Hierdurch ist es möglich, dass auch im Bereich der parabolischen Lichtsammellinse noch Szintillationslicht entstehen und für die Detektion genutzt werden kann.

Bei der parabolischen Lichtsammellinse kann es sich um eine vom Szintillatorstab gesonderte optische Komponente handeln, die eine ebene Eintrittsfläche aufweist, welche beim Zusammenbau der Komponenten mit der ebenen Stirnfläche des Szintillatorstabs optisch gekoppelt wird. Die optische Ankopplung kann z.B. durch eine Kleberschicht aus einem Kleber mit angepasstem Brechungsindex, eine Flüssigkeitsschicht (z.B. aus Silikonöl) oder Zwischenlage dünnen, transparenten optischen Elements realisiert werden. Durch eine getrennte Fertigung von Szintillatorstab und parabolischer Lichtsammellinse sind u.a. Kosteneinsparungen möglich.

Es ist jedoch auch möglich, dass ein an die Stirnfläche angrenzender Endabschnitt des Szintillatorstabs als optische Lichtkonzentrationseinrichtung zum Sammeln von Szintillationslicht in Richtung der Stirnfläche ausgebildet ist. Bei dieser Variante bildet die optische Lichtkonzentrationseinrichtung mit dem Szintillatorstab eine monolithische integrierte Komponente. Im Vergleich zu einer vom Szintillatorstab gesonderten optischen Lichtkonzentrationseinrichtung entfallen (mindestens) zwei prinzipiell verlustbehaftete Grenzflächen zwischen Szintillatorstab und optischer Lichtkonzentrationseinrichtung, wodurch die Detektionseffizienz erhöht werden kann.

Wenn es sich bei der optischen Lichtsammeleinrichtung um eine parabolische Lichtsammellinse handelt, kann die Mantelfläche des Szintillatorstabs im Endabschnitt derart gestaltet sein, dass der Endabschnitt als parabolische Lichtsammellinse wirkt. In diesem Fall würde sich die Querschnittsfläche des Szintillatorstabs im Bereich des Endabschnitts in Richtung Stirnfläche gemäß der gewünschten Mantellinienform der parabolischen Lichtsammellinse in Axialrichtung zunehmend verringern.

Bei anderen Ausführungsformen, die nicht Teil dieser Erfindung sind, ist vorgesehen, dass die optische Lichtkonzentrationseinrichtung eine Gradientenlinse aufweist oder durch eine solche gebildet ist. Der Begriff Gradientenlinse bezeichnet hierbei eine optische Komponente, deren Brechungsindex ausgehend von einer Mittellängsachse in radialer Richtung abnimmt, beispielsweise gemäß einer Parabelfunktion. Die Gradientenlinse kann die gleiche Querschnittsform und Querschnittsgröße haben wie der Szintillatorstab, was aber nicht zwingend ist. Die Gradientenlinse kann eine ebene Eintrittsfläche haben, die optisch mit der Stirnfläche des Szintillatorstabs gekoppelt werden kann. An eine ebene Austrittsfläche der Gradientenlinse kann der Photosensor mit seiner aktiven Fläche angekoppelt werden.

Alternativ oder zusätzlich könnte die optische Lichtkonzentrationseinrichtung auch eine von dem Szintillatorstab gesonderte Sammeloptik aufweisen, die optisch zwischen der Stirnfläche und der aktiven Fläche angeordnet ist. Die Sammeloptik kann mit einer oder mehreren Linsen aufgebaut sein, die mindestens eine gekrümmte Linsenfläche, insbesondere eine konvex gekrümmte Linsenfläche, aufweisen. Die Sammeloptik kann als verkleinernd wirkendes optisches Abbildungssystem fungieren, welches die Stirnfläche des Szintillatorstabs auf die aktive Fläche abbildet.

Gemäß einer Ausführungsform, die nicht Teil dieser Erfindung ist, weist die optische Lichtkonzentrationseinrichtung einen Wellenlängenschieber auf. Der Wellenlängenschieber kann das Primärlicht der Lichtblitze des Szintillators aufnehmen und in Sekundärlicht einer größeren Wellenlänge umwandeln. Dieses Sekundärlicht ist nun innerhalb des Wellenlängenschiebers gekoppelt, wodurch ein hoher Konzentrationsfaktor erreicht werden kann. Das Sekundärlicht der größeren Wellenlänge wird innerhalb des Wellenlängenschiebers zum Photodetektor transportiert und dort detektiert. Bei dieser Variante sollte der Photosensor so ausgelegt sein, dass er im Bereich der größeren zweiten Wellenlänge einen hohen Umwandlungswirkungsgrad aufweist.

Bei einer Ausführungsform, die nicht Teil dieser Erfindung ist, ist der Wellenlängenschieber in den Szintillatorstab integriert, erstreckt sich über einen Teil oder die gesamte Länge des Szintillatorstabs und mündet an der Stirnfläche, so dass eine Stirnfläche des Wellenlängenschiebers einen Teil der Stirnfläche des Szintillatorstabs bildet. Beispielsweise kann eine Faser aus Wellenlängenschiebermaterial in den Szintillatorstab so eingebettet werden, dass die Faser komplett von Szitillatormaterial umgeben ist. Es ist auch möglich, mindestens eine Schicht oder Platte aus Wellenlängenschiebermaterial zwischen angrenzenden Stabelementen des Szintillatorstabs nach Art eines Sandwichs einzubetten.

Bei einer anderen Ausführungsform, die nicht Teil dieser Erfindung ist, weist die optische Lichtkonzentrationseinrichtung einen Wellenlängenschieber auf, der optisch an die Stirnfläche angekoppelt ist, so dass das Szintillationslicht erst nach Austritt aus der Stirnfläche in das Wellenlängenschiebermaterial eintritt. Mindestens ein Photosensor der Sensoreinheit kann an der dem Szintillatorstab gegenüberliegenden Seite des Wellenlängenschiebers angeordnet sein. Die Variante mit an der Stirnseite angekoppeltem Wellenlängenschieber bietet aber auch die Möglichkeit, einen, mehrere oder alle Photosensoren der Sensoreinheit an der Umfangsfläche des Wellenlängenschiebers anzukoppeln, so dass ggf. die dem Szintillatorstab gegenüber liegende Seite des Wellenlängenschiebers frei von Photosensoren bleiben kann. In diesem Fall kann ein zweiter Szintillatorstab an die freie Fläche des Wellenlängenschiebers optisch so angekoppelt werden, dass der Wellenlängenschieber in Längsrichtung des Szintillatorstabs gesehen zwischen zwei Szintillatorstäben angeordnet ist und eine Auslesung am Umfang des Wellenlängenschiebers erfolgt.

Als Photosensor der Sensoreinheit könnte wie bei vielen herkömmlichen Prozessmesssystemen ein Vakuum-Photomultiplier (vPMT) verwendet werden. Derartige Photosensoren verbinden eine große aktive Fläche mit wenig Eigenrauschen.

Für Anwendungen, bei denen ein geringer Energieverbrauch angestrebt wird und/oder für Einsätze in rauen Umgebungen sind Vakuum-Photomultiplier in der Regel jedoch nicht oder nur bedingt geeignet. Mithilfe der beanspruchten Erfindung ist es möglich, hochempfindliche Prozessmesssysteme auch mithilfe kleinflächiger Photosensoren (Photosensoren mit relativ kleiner aktiver Fläche) aufzubauen.

Bei manchen Ausführungsformen, die nicht Teil dieser Erfindung sind, ist daher vorgesehen, dass der Photosensor mindestens eine halbleiterbasierte Photodiode mit oder ohne innere Verstärkung aufweist. Insbesondere kann die Sensoreinheit mindestens einen Silizium-Photomultiplier (SiPM) aufweisen, also einen siliziumbasierten Photosensor mit interner Verstärkung. Möglich wäre auch mindestens eine Avalanche-Photodiode.

Die beanspruchte Erfindung ermöglicht eine effiziente Auslesung von Prozessmesssystemen mit mindestens einem Szintillatorstab, wobei möglichst viel Szintillationslicht auf eine relativ kleine fotosensitive Fläche (aktive Fläche) konzentriert wird. Dadurch kann unter anderem ein besseres Signal-Rausch-Verhältnis erzielt werden als bei herkömmlichen Systemen. Weiterhin können sich Einsparungen in den Kosten ergeben, da weniger Silizium-Potomultiplier oder andere Photodioden für die Sensoreinheit verwendet werden können. Es ist prinzipiell möglich, dass die Sensoreinheit nur einen einzigen Silizium-Photomultiplier oder nur eine einzige andere halbleiterbasierte Photodiode aufweist. Es können auch mehrere sein. Grundsätzlich kann die Anzahl halbleiterbasierter Photosensoren gering gehalten werden und beispielsweise auf maximal neun bis zwölf begrenzt werden. Eine relativ kleine aktive Fläche von halbleiterbasierten Photosensoren bietet als weiteren Vorteil weniger Energieverbrauch, geringeres Rauschen sowie eine eventuell schnellere Auslese aufgrund der kleineren kapazitiven Last.

Der Szintillatorstab kann ein einziges monolithisches Bauteil aus Szintillatormaterial sein. Es ist auch möglich, dass der Szintillatorstab aus mehreren Einzelstabelementen zusammengesetzt ist. Es kann sich dabei z.B. um biegsame Fasern aus Szintillatormaterial handeln, so dass es leichter möglich ist, einen Szintillatorstab mit einer von einer geradlinigen Form abweichenden Gestalt zu bauen, der sich beispielsweise an gewölbte Konturen eines Rohres oder eines Behälters besser anpassen lässt.

In vielen Anwendungsfällen ist das Prozessmesssystem zur Durchführung einer Gamma-Absorptionsmessung konfiguriert. Dabei wird an einer Seite eines Behälters oder eines Rohres eine radioaktive Strahlungsquelle zur Erzeugung von Gamma-Strahlung enthaltender Messstrahlung angeordnet, während ein Stabdetektor (mindestens ein Szintillatorstab mit den zugeordneten Komponenten) an der gegenüberliegenden Seite des Behälters oder Rohres angeordnet wird. Aus der Abschwächung der Gammastrahlung auf dem Weg von der Strahlungsquelle zum Stabdetektor können je nach Messaufgabe z.B. der Füllstand eines Mediums oder die Dichte eines Mediums im Behälter oder Rohr oder daraus abgeleitete Prozessmessgrößen bestimmt werden. Als alternative Verwendungsmöglichkeiten kommen z.B. Rückstreumessungen oder Radioaktivitätsmessungen in Betracht.

### KURZBESCHREIBUNG DER ZEICHNUNGEN

Weitere Vorteile und Aspekte der Erfindung ergeben sich aus den Ansprüchen und aus der nachfolgenden Beschreibung von bevorzugten Ausführungsbeispielen der Erfindung, die nachfolgend anhand der Figuren erläutert sind.
- Fig. 1: zeigt Komponenten eines Prozessmesssystems zur radiometrischen Messung des Füllstands einer Flüssigkeit in einem Behälter mit einem Stabdetektor gemäß einem Ausführungsbeispiel;
- Fig. 2: zeigt einen Szintillatorstab mit einem Endabschnitt, der als parabolische Lichtsammellinse ausgestaltet ist;
- Fig. 3: zeigt einen Szintillatorstab, an den eine gesonderte parabolische Lichtsammellinse optisch angekoppelt ist;
- Fig. 4: zeigt ein Ausführungsbeispiel, bei dem der Szintillatorstab aus mehreren Einzelstabelementen zusammengesetzt ist;
- Fig. 5: zeigt in 5A ein Ausführungsbeispiel, das nicht Teil der Erfindung ist, eines Szintillatorstabs, an den eine Gradientenlinse optisch angekoppelt ist und in 5B den radialen Brechungsindexverlauf in der Gradientenlinse sowie die Auswirkung auf achsparallel eintretende Lichtstrahlen;
- Fig. 6: zeigt ein Ausführungsbeispiel, das nicht Teil der Erfindung ist, mit einem in den Szintillatorstab integrierten Wellenlängenschieber als Lichtkonzentrationseinrichtung;
- Fig. 7: zeigt in 7A einen Querschnitt durch den Szintillatorstab der Fig. 6 senkrecht zur Längsrichtung sowie in Fig. 7B einen senkrecht zur Längsrichtung verlaufenden Querschnitt durch ein anderes Ausführungsbeispiel, das nicht Teil der Erfindung ist, mit in den Szintillatorstab integrierten Wellenlängenschieber; und
- Fig. 8: zeigt schematisch eine schrägperspektivische Ansicht eines Ausführungsbeispiels, das nicht Teil der Erfindung ist, mit einem Wellenlängenschieber, der an die Stirnseite eines Szintillatorstabes optisch angekoppelt ist.

### DETAILLIERTE BESCHREIBUNG DER AUSFÜHRUNGSBEISPIELE

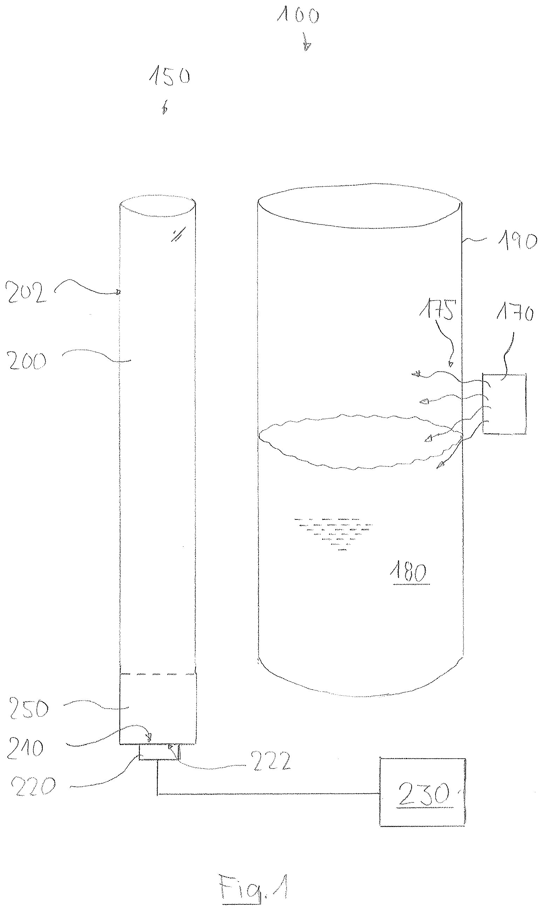

Die schematische Fig. 1 zeigt Komponenten eines Prozessmesssystems 100 zur radiometrischen Messung des Füllstands einer Flüssigkeit 180 in einem Behälter 190. Das Prozessmesssystem umfasst eine radioaktive Strahlungsquelle 170 zur Erzeugung von Messstrahlung 175, die Gamma-Strahlung enthält und den Behälter und gegebenenfalls die darin vorhandene Flüssigkeit von der Seite der Strahlungsquelle zur gegenüberliegenden Seite durchdringen kann. An der der Strahlungsquelle gegenüberliegenden Seite des Behälters ist ein Stabdetektor 150 angeordnet.

Der Stabdetektor umfasst einen Szintillatorstab 200, der aus einem Szintillatormaterial besteht, welches beim Durchgang der ionisierenden Messstrahlung zu Szintillationen, also zur blitzartigen Aussendung von Licht (Szintillationslicht), angeregt werden kann. Bei dem Szintillatormaterial kann es sich z.B. um ein thermoplastisches Polymermaterial, wie z.B. Polyvinyltoluen (PVT) oder Polystyrol (PS), handeln, in das szintillationsfähige Moleküle eingelagert sind. Der Szintillatorstab 200 kann, wie dargestellt, eine geradlinige, langgestreckte, kreiszylindrische Gestalt haben und leitet einen Anteil des Szintillationslicht nach Art eines Lichtleiters in seinem Inneren direkt und/oder durch gegebenenfalls mehrfache Totalreflexion an der Mantelfläche 202 in Richtung der Stirnseiten des Szintillatorstabs. Während die im Beispiel oben gezeigte ebene Stirnfläche z.B. durch eine aufgebrachte reflektierende Beschichtung für Szintillationslicht reflektierend wirkt, kann das Szintillationslicht an der gegenüberliegenden Seite im Bereich der ebenen Stirnfläche 210 aus dem Szintillatorstab austreten. Die Stirnfläche 210 ist somit als Austrittsfläche für Szintillationslicht ausgelegt.

Dem Szintillatorstab 200 ist eine Sensoreinheit 220 zugeordnet, die eine der Stirnfläche 210 zugewandte aktive Fläche 222 aufweist, die zum Empfang des auftreffenden Szintillationslichts dient. Die Sensoreinheit enthält einen oder mehrere Photosensoren. Jeder Photosensor hat eine photosensitive Fläche, die hier als aktive Fläche bezeichnet wird. Beim Auftreffen von Licht auf die aktive Fläche eines Photosensors werden der Lichtintensität proportionale elektrische Signale erzeugt. Die aktive Fläche der Sensoreinheit wird durch die Gesamtheit der aktiven Fläche(n) der darin enthaltenen Photosensoren (einer oder mehrere) gebildet. Die Sensoreinheit ist somit dazu ausgebildet, aus der Stirnfläche ausgetretenes und auf die aktive Fläche der Sensoreinheit auftreffendes Szintillationslicht in elektrische Signale umzuwandeln. Die Sensoreinheit 220 ist elektrisch an eine Auswerteeinheit 230 angeschlossen, die beispielsweise eine Mikroprozesssteuerung enthält und dazu konfiguriert ist, in der Sensoreinheit 220 erzeugte elektrische Signale oder daraus abgeleitete Signale zur Messung des Füllstands des Behälters 190 auszuwerten.

Innerhalb des Szintillatorstabs pflanzt sich ein Anteil des Szintillationslichts in dem von der Mantelfläche des Szintillatorstabs umschlossenen Volumen fort, wobei an jedem Ort entlang der Länge des Szintillatorstabs die lichtführende Querschnittsfläche der Querschnittsfläche des Szintillatorstabs entspricht. Bei einem durchgängig kreiszylindrischen Szintillatorstab entspricht die über die Länge des Szintillatorstabs gemittelte mittlere lichtführende Querschnittsfläche der (kreisrunden) Querschnittsfläche an jedem Ort entlang der kreiszylindrischen Gestalt.

Wie in Fig. 1 ersichtlich, ist die aktive Fläche 222 der Sensoreinheit 220 deutlich kleiner als die mittlere lichtführende Querschnittsfläche des Szintillatorstabs. Die Größe der aktiven Fläche kann beispielsweise zwischen 20% und 50% der Größe der Stirnfläche 210 betragen.

Mit der Sensoreinheit kann nur dasjenige aus der Stirnfläche ausgetretene Szintillationslicht erfasst werden, welches auf die aktive Fläche der Sensoreinheit bzw. die aktive Fläche eines Photosensors der Sensoreinheit fällt.

Um zu erreichen, dass ein möglichst hoher Anteil des in Richtung der Stirnfläche 210 propagierenden und aus der Stirnfläche austretenden Szintillationslichts auf die aktive Fläche 222 der Sensoreinheit 220 bzw. die aktive Fläche eines darin enthaltenen Photosensors treffen und dadurch detektiert werden kann, ist benachbart zur Sensoreinheit eine optische Lichtkonzentrationseinrichtung 250 zum Konzentrieren von Szintillationslicht in Richtung der aktiven Fläche 222 der Sensoreinheit vorgesehen. Die Lichtkonzentrationseinrichtung kann mit relativ geringen Verlusten den lichtführenden Querschnitt der Anordnung verkleinern, so dass Szintillationslicht auf die aktive Fläche der Sensoreinheit konzentriert werden kann. Hierdurch kann unter anderem eine Erhöhung des Signal-Rausch-Verhältnisses im Vergleich zu einer Anordnung ohne Lichtkonzentrationseinrichtung erreicht werden. Außerdem wird es dadurch besser möglich, trotz eines gegebenenfalls relativ großen lichtführenden Querschnitts des Szintillatorstabs Sensoreinheiten mit relativ dazu kleiner aktiver Fläche effizient zu nutzen. Dies ermöglicht insbesondere auch den Einsatz von halbleiterbasierten Photosensoren, die derzeit nur mit relativ kleinen aktiven Flächen zu vertretbaren Kosten hergestellt werden können. Im Beispielsfall weist die Sensoreinheit 220 zwölf Silizium-Photomultiplier (SiPM) mit jeweils quadratischer aktiver Fläche auf, die ein rechteckiges Array bilden. Die aktive Fläche der Sensoreinheit (Summe der aktiven Flächen der einzelnen Silizium-Photomultiplier) beträgt ca. 60% der Fläche der kreisrunden Stirnfläche 210.

Es gibt unterschiedliche Möglichkeiten der Ausgestaltung einer optischen Lichtkonzentrationseinrichtung, die an die Besonderheiten der Lichtführung in einem Szintillatorstab angepasst ist.

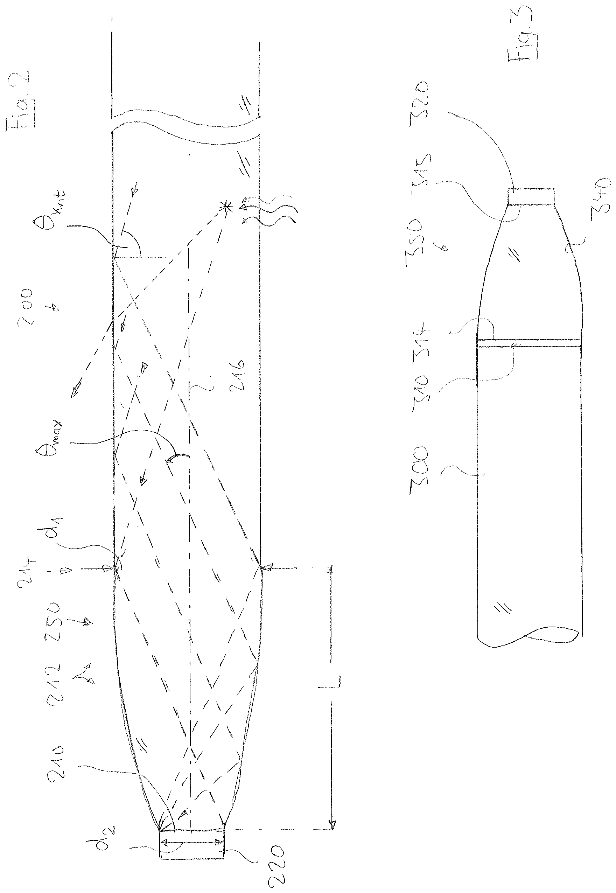

Bei dem Ausführungsbeispiel von Fig. 2 wird die optische Lichtkonzentrationseinrichtung 250 im Wesentlichen dadurch gebildet, dass ein an die Stirnfläche 210 angrenzender Endabschnitt 212 der Länge L des Szintillatorstabs als optische Lichtkonzentrationseinrichtung zum Sammeln von Szintillationslicht in Richtung der Stirnfläche ausgebildet ist. Der Endabschnitt 212 hat die Gestalt einer parabolischen Lichtsammellinse 250, die im Beispielsfall dadurch hergestellt wurde, dass der Endabschnitt des im Übrigen kreiszylindrischen Szintillatorstabs durch materialabtragende oder umformende Bearbeitung so bearbeitet wurde, dass sich der Endabschnitt ausgehend von einer virtuellen Eintrittsfläche 214 des Endabschnitts in Richtung der Stirnfläche 210 zunehmend verjüngt. Die Stirnfläche 210 bildet gleichzeitig die Austrittsfläche der parabolischen Lichtsammellinse. Die zur Achse 216 rotationssymmetrische Mantelfläche kann als Ausschnitt eines elliptischen Paraboloids beschrieben werden.

Die Länge L des Endabschnitts bzw. der parabolischen Lichtsammellinse ist größer als der Durchmesser des Szintillatorstabs an der Eintrittsfläche 214 und beträgt fast das Doppelte dieses Durchmessers. Die gesamte Länge des Szintillatorstabs kann im Meterbereich liegen, z.B. bei bis zu 8 Metern, es sind aber auch relativ kleine Gesamtlängen möglich, z.B. nur das Doppelte bis Zehnfache des Durchmessers des Szintillatorstabs. Die Gesamtlänge kann ein Vielfaches der Länge L betragen und z.B. zwischen 2^{∗}L und 200^{∗}L liegen.

Die optische Lichtkonzentrationseinrichtung bzw. die parabolische Lichtsammellinse besteht aus dem gleichen Material wie der Rest des Szintillatorstabs, also aus einem Szintillatormaterial. Hierdurch umfasst die aktive Länge des Szintillatorstabs den Bereich der parabolischen Lichtsammellinse.

Die parabolische Lichtsammellinse kann Lichtstrahlen, die durch eine Eintrittsfläche mit einem ersten Durchmesser d₁ unter einem Einfallswinkel eintreten, der kleiner oder gleich einem maximalen Einfallswinkel Θₘₐₓ ist, auf eine kleinere Fläche mit zweitem Durchmesser d₂ an der Stirnfläche 210 des Szintillatorstabs konzentrieren. Der maximale Einfallswinkel wird auch als Akzeptanzwinkel bezeichnet. Lichtstrahlen, die unter einem größeren Einfallswinkel als dem Akzeptanzwinkel durch die Eintrittsfläche in die parabolische Lichtsammellinse eintreten, werden in den kreiszylindrischen Abschnitt des Szintillatorstabs zurückreflektiert. Das Szintillationslicht kann aufgrund der Phasenraumgesetze nicht beliebig stark, also auf eine beliebig kleine Austrittsfläche konzentriert werden. Vielmehr existiert ein Zusammenhang zwischen dem maximalen Einfallswinkel Θₘₐₓ und dem sogenannten Konzentrations-Verhältnis C = d₁²/d₂² derart, dass das Konzentrations-Verhältnis umso größer werden kann, je kleiner der maximale Einfallswinkel ist.

Bei dem Ausführungsbeispiel ist der Akzeptanzwinkel (maximaler Einfallswinkel) Θₘₐₓ so ausgelegt, dass dieser Winkel dem kritischen Winkel Θₖᵣᵢₜ der Totalreflexion des Szintillatormaterials derart angepasst ist, dass im Wesentlichen alle Szintillationslichtstrahlen, die unter Totalreflexion im Szintillatorstab transportiert werden, auf die kleinere Austrittsfläche mit Durchmesser d₂ konzentriert werden können. Diese Auslegung berücksichtigt, dass in Stabdetektoren bzw. in Detektoren mit Szintillatorstäben diejenigen Szintillationslichtstrahlen, die via Totalreflexion innerhalb des Szintillatorstabs transportiert werden, zum größten Signal beitragen, weshalb es ausreichen kann, im Wesentlichen nur diese Szintillationslichtstrahlen zu detektieren.

Die Formgebung des Abschnitts, der die parabolische Lichtsammellinse bildet, ist dabei so ausgelegt, dass der maximale Akzeptanzwinkel Θₘₐₓ der parabolischen Lichtsammellinse einem kritischen Winkel Θₘₐₓ der Totalreflexion innerhalb des Szintillatorstabs so angepasst ist, dass die Bedingung Θₘₐₓ ≥ 90° - Θₖᵣᵢₜ gilt. Bei typischen kritischen Winkeln der Totalreflexion von Szintillatormaterialien im Bereich von 38° bis 40° können beispielsweise Akzeptanzwinkel im Bereich von 50° bis 52° zweckmäßig sein, wodurch wiederum Konzentrations-Verhältnisse im Bereich von 1,5 bis 1,7 realisierbar sind.

Im Beispielsfall hat das Szintillatormaterial einen Brechungsindex von ca. n₂ = 1,58. Dadurch ergibt sich bei einer Brechungsindex n₁ = 1 der gasförmigen Umgebung der kritische Winkel der Totalreflexion des Polymerszintillators gemäß Θₖᵣᵢₜ = asin(n₁/n₂) = asin(1/1,58) zu ca. 39°, woraus sich ein Akzeptanzwinkel von ca. 51° ergibt. Das Konzentrationsverhältnis C ergibt sich dann nach der Theorie gemäß C = 1/(sin²(Θₖᵣᵢₜ)), so dass hier eine maximale Flächenkonzentration von ca. 1,65 erreicht wird.

Bei dem Ausführungsbeispiel eines Stabdetektors in Fig. 3 ist eine optische Lichtkonzentrationseinrichtung 350 in Form einer parabolischen Lichtsammellinse 340 vorgesehen, die als ein vom Szintillatorstab 300 getrenntes bzw. separates Bauteil vorliegt. Die parabolische Lichtsammellinse ist aus einem nicht-szintillierenden, für Szintillationslicht transparenten Material gefertigt und hat eine ebene Eintrittsfläche 314, in deren Bereich der Durchmesser der rotationssymmetrischen Lichtsammellinse dem Durchmesser des kreiszylindrischen Szintillatorstabes 300 entspricht. An die gegenüberliegende ebene Austrittsfläche 315 ist die Sensoreinheit 320 optisch angekoppelt. Im Bereich der optischen Koppelstelle zwischen der ebenen Stirnfläche 310 des Szintillatorstabes und der Eintrittsfläche 314 der Lichtsammellinse befindet sich ein optisches Koppelmedium, beispielsweise eine dünne Schicht eines transparenten Epoxy-Klebers mit einem an den Brechungsindex des Szintillatormaterials und den Brechungsindex der Lichtsammellinse angepassten Brechungsindex. Die relativen und absoluten Dimensionen der parabolischen Lichtsammellinse können denjenigen des Endabschnitts 212 in Fig. 2 entsprechen, weshalb auf die dortige Beschreibung verwiesen wird.

Ein Vorteil dieser Variante besteht darin, dass die parabolische Lichtsammellinse als separates Bauteil gefertigt und weiterverarbeitet werden kann. Es ergeben sich im Vergleich zu einer monolithischen Variante (vgl. Fig. 2) mehr Freiheitsgrade für die Ausgestaltung der parabolischen Lichtsammellinse und des zugehörigen Szintillatorstabs. Allerdings liegen im Vergleich zur monolithischen Variante von Fig. 2 im Bereich des Übergangs vom Szintillatorstab zur Lichtsammellinse zwei zusätzliche Grenzflächen vor, die zu einer Verringerung der Effizienz führen können. Es sollte durch geeignete Maßnahmen sichergestellt werden, dass die Qualität der optischen Kopplung über die Betriebszeit des Stabdetektors sich nicht signifikant ändert, vor allem im harten industriellen Umfeld mit Temperatureinflüssen und Vibrationseinflüssen. Insbesondere für solche Anwendungen könnten Varianten entsprechend Fig. 2 mit einer direkt aus dem Szintillatormaterial gefertigten Lichtsammellinse langfristig überlegen sein.

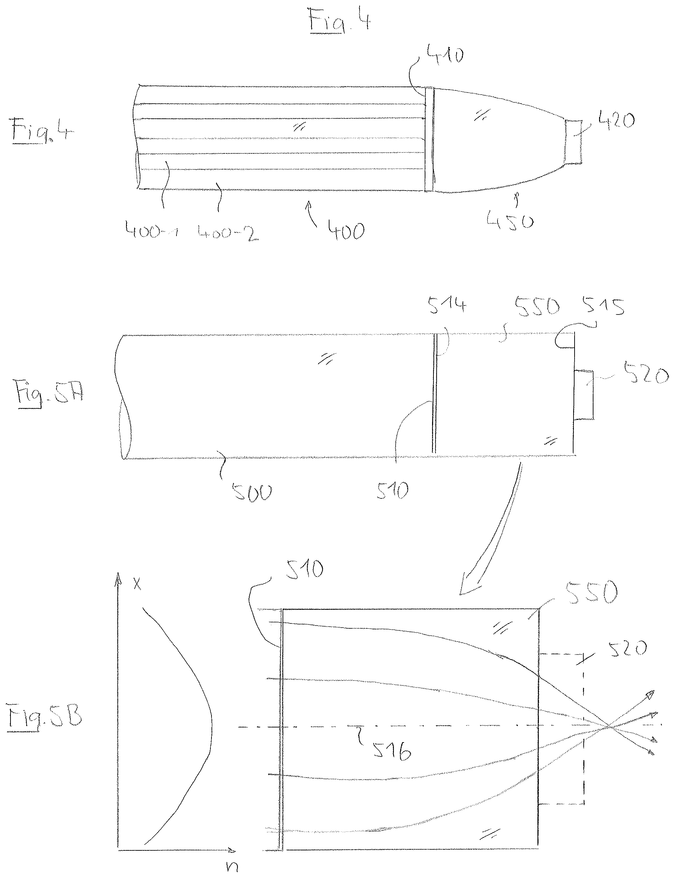

Bei dem Ausführungsbeispiel von Fig. 4 ist der Szintillatorstab 400 nicht als einzelne monolithische Komponente ausgelegt, sondern aus einer Vielzahl von Einzelstabelementen 400-1, 400-2 etc. in Form biegsamer Fasern zusammengesetzt, die im Wesentlichen volumenfüllend direkt aneinandergrenzend zu einem Faserbündel kombiniert sind, wobei jedes Einzelstabelement (jede Faser) für sich als Lichtleiter für Szintillationslicht dient. Die miteinander bündigen Stirnflächen der Einzelstabelemente bilden die ebene Stirnfläche 410 des Szintillatorstabs. Als optische Lichtkonzentrationseinrichtung 450 ist eine parabolische Lichtsammellinse ähnlich der Variante von Fig. 3 vorgesehen. Die Sensoreinheit 420 ist optisch an die ebene Austrittsseite der Lichtsammellinse angekoppelt.

Bei dem Ausführungsbeispiel, das nicht Teil der Erfindung ist, eines Stabdetektors in Fig. 5 ist zwischen der ebenen Stirnfläche 510 des kreiszylindrischen Szintillatorstabes 500 und der Sensoreinheit 520 eine optische Lichtkonzentrationseinrichtung 550 in Form einer Gradientenlinse 550 angeordnet. Die Gradientenlinse ist ein kreiszylindrisches optisches Bauteil aus einem für Szintillationslicht transparenten Material mit einer der Stirnfläche 510 zugewandten ebenen Eintrittsfläche 514 und einer hierzu parallelen Austrittsfläche 515. An die Austrittsfläche ist die aktive Fläche der Sensoreinheit 520 optisch angekoppelt. Wie in Fig. 5B schematisch dargestellt, fokussiert die Gradientenlinse 550 das Szintillationslicht aufgrund eines radialen Indexgradienten (das heißt eines Gradienten des Brechungsindex in Radialrichtung) in der Gradientenlinse, wobei der Brechungsindex im Bereich der Längsmittelachse 516 am größten ist und in Radialrichtung zur Mantelfläche hin gemäß einem rotationssymmetrischen Profil abnimmt. Aufgrund dieses Indexgradienten kommt die sammelnde optische Linsenwirkung ohne konvexe Oberflächen an Eintrittsseite und Austrittsseite zustande, was die Montage sowohl der Gradientenlinse an den Szintillatorstab als auch die Montage der Sensoreinheit an die Austrittsfläche 515 der Gradientenlinse erleichtert. Zwischen der Stirnfläche 510 des Szintillatorstabes und der ebenen Eintrittsfläche 510 kann ein optisches Koppelmedium, beispielsweise Silikonöl oder eine Kleberschicht, vorgesehen sein, ebenso zwischen der ebenen Austrittsseite 515 und der aktiven Fläche der Sensoreinheit 520.

Anstelle einer Gradientenlinse könnte auch eine herkömmliche Sammeloptik zwischen der Stirnfläche des Szintillatorstabes und der Sensoreinheit vorgesehen sein, beispielsweise mit einer bikonvexen Sammellinse. Im Vergleich zu einer derartigen Anordnung bietet die Verwendung einer sammelnden Gradientenlinse unter anderem den Vorteil, dass große Indexsprünge bei den Übergängen zwischen Szintillatorstab-Luft-Linse und Linse-Luft-Sensoreinheit vermieden werden können, womit Reflexionsverluste gegenüber einer konventionellen Sammellinse minimiert werden können.

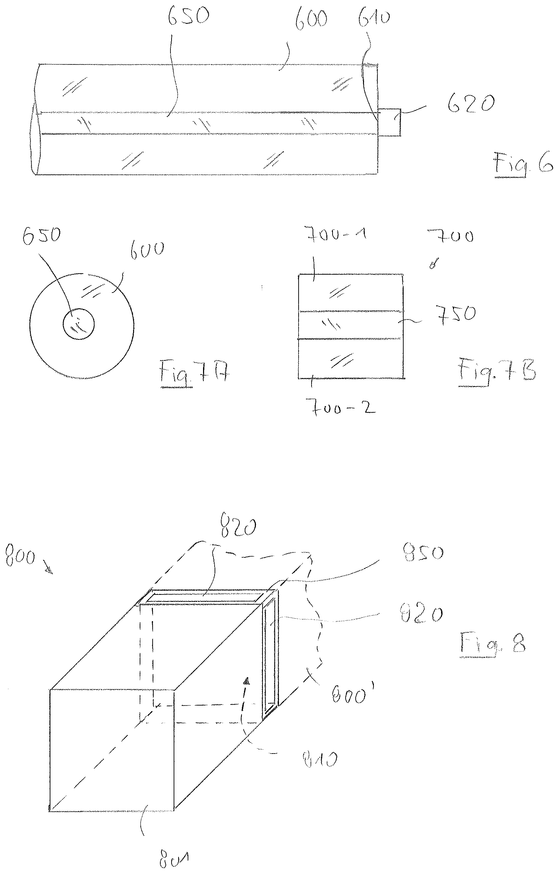

Bei dem Ausführungsbeispiel, das nicht Teil der Erfindung ist, eines Szintillatorstabs in Fig. 6 wird zum Zwecke der Lichtkonzentration in Richtung der Sensoreinheit 620 ein Wellenlängenschieber verwendet. In das Innere des Szintillatorstabs 600 ist eine zentrale Faser 650 aus Wellenlängenschiebermaterial in das Szintillatormaterial eingebettet. Der (mittlere) Durchmesser dieser Faser kann beispielsweise zwischen 5% und 30% des mittleren Durchmessers des Szintillatorstabs betragen. Die Faser 650 endet an der Seite der Sensoreinheit bündig mit der Stirnfläche 610, so dass die Austrittsfläche der Faser 650 einen Teil der Stirnfläche 610 des Szintillatorstabs bildet. Die zentrale Faser aus Wellenlängenschiebermaterial wirkt als Lichtkonzentrationseinrichtung. Dabei nimmt die zentrale Faser einen Anteil des im Szintillatormaterial entstehenden Szintillationslichts als Primärlicht auf und emittiert Sekundärlicht einer größeren Wellenlänge. Dieses Sekundärlicht ist dann innerhalb der zentralen Faser gekoppelt und wird durch die Faser nach Art eines Lichtleiters in Längsrichtung der Faser, also insbesondere auch in Richtung der am Ende der Faser angekoppelten Sensoreinheit 620 durch gegebenenfalls mehrfache innere Totalreflexion geleitet. Mit einem derartigen Aufbau kann das Licht gegebenenfalls besser konzentriert werden als dies eigentlich durch die Phasenraumgesetze möglich ist. Für die Anwendung ist zu berücksichtigen, dass die Umwandlung von Primärlicht in Sekundärlicht typischerweise mit relativ geringer Effizienz, beispielsweise im Bereich von ca. 10%, erfolgt. Eine Optimierung der Empfindlichkeit kann realisiert werden, wenn der mindestens eine Photosensor der Sensoreinheit 620 im Bereich der Wellenlänge des Sekundärlichts eine hohe und gegebenenfalls eine maximale Empfindlichkeit aufweist.

In Fig. 7 sind unterschiedliche Varianten von Szintillatorstäben mit integrierten Wellenlängenschiebern im Querschnitt dargestellt. Fig. 7A zeigt einen senkrecht zur Längsrichtung des Beispiels von Fig. 6 verlaufenden Querschnitt, aus dem ersichtlich ist, dass der Wellenlängenschieber 650 als kreiszylindrisches Element im Zentrum eines insgesamt kreiszylindrischen Szintillatorstabes 600 angeordnet ist. Der integrierten Wellenlängenschieber ist hier in Umfangsrichtung allseitig von Szintillatormaterial umgeben. Bei dem Ausführungsbeispiel von Fig. 7B hat der Szintillatorstab 700 über seine gesamte Länge eine quadratische Querschnittsform. Zwischen zwei jeweils im Querschnitt rechteckförmigen Einzelstabelementen 700-1 und 700-2, die sich über die gesamte Länge erstrecken, ist eine dünne Platte 750 aus Wellenlängenschiebermaterial eingefügt. Die ebenen Plattenflächen des Wellenlängenschiebers stehen jeweils im optischen Kontakt mit ebenfalls ebenen Grenzflächen der Einzelstabelemente 700-1 und 700-2, so dass Szintillationslicht von zwei gegenüber liegenden Seiten verlustarm aus den Einzelstabelementen 700-1, 700-2 in das dazwischenliegende Wellenlängenschiebermaterial einkoppeln kann. Die Platte aus Wellenlängenschiebermaterial dient analog dem Beispiel von Fig. 6 als optische Lichtkonzentrationseinrichtung 750. Eine in Fig. 7B nicht dargestellte Sensoreinheit ist ähnlich wie bei dem Ausführungsbeispiel von Fig. 6 an die ebene Stirnfläche des Szintillatorstab im Bereich der ebenen Stirnfläche des Wellenlängenschiebers 750 angekoppelt, um das vom Wellenlängenschieber geführte Licht zu detektieren.

Fig. 8 zeigt eine schrägperspektivische Darstellung eines weiteren Ausführungsbeispiels, bei dem ein Wellenlängenschieber als optische Lichtkonzentrationseinrichtung dient. Der Szintillatorstab 800 hat in diesem Beispiel eine quadratische Querschnittsform und eine axiale Länge, die ein Vielfaches der Kantenlänge des Quadrats beträgt. Die dem Betrachter zugewandte Stirnfläche 801 ist verspiegelt. Die gegenüberliegende, im Querschnitt quadratische Stirnfläche 810 dient als Lichtaustrittsfläche für das Szintillationslicht. An diese Stirnfläche ist eine dünne Platte aus Wellenlängenschiebermaterial optisch so angekoppelt, dass das gesamte aus der Stirnfläche 810 austretende Szintillatorlicht in den Wellenlängenschieber einkoppeln kann. Die Platte aus Wellenlängenschiebermaterial ist einige Millimeter dick, dient als optische Lichtkonzentrationseinrichtung 850 und wandelt das Primärlicht der Lichtblitze des Szintillatormaterials in Sekundärlicht einer größeren Wellenlänge um.

Die Platte aus Wellenlängenschiebermaterial, also die optische Lichtkonzentrationseinrichtung, weist entsprechend der quadratischen Querschnittsform vier parallel zur Längsachse des Szintillatorstabes verlaufende ebene Seitenflächen auf. Die zugeordnete Sensoreinheit 820 hat einen oder mehrere Photodetektoren, deren aktiven Flächen an eine diese Umfangsflächen optisch angekoppelt sind, um das Sekundärlicht auszulesen beziehungsweise zu detektieren. Im Gegensatz zu den anderen Ausführungsbeispielen erfolgt hier also die Auslesung von zu detektierendem Licht an einer Umfangsfläche der langgestreckten Anordnung, also mehr oder weniger senkrecht zur Längsrichtung.

Hierdurch wird u.a. die Möglichkeit geschaffen, an die der Stirnfläche 810 gegenüberliegende Fläche des Wellenlängenschiebers 850 einen weiteren Szintillatorstab 800' optisch anzukoppeln, was in Fig. 8 gestrichelt angedeutet ist. Dann kann auch aus diesem Szintillatorstab Szintillationslicht in das Wellenlängenschiebermaterial eintreten, und zwar durch diejenige Stirnfläche des Szintillatorstabes 800', die der Stirnfläche 810 zugewandt ist. Hier ist also die optische Lichtkonzentrationseinrichtung 850 zwischen den einander zugewandten Stirnflächen von zwei Szintillatorstäben 800, 800' angeordnet, wobei die aktiven Flächen von Photosensoren der Sensoreinheit an Lichtaustrittsflächen angekoppelt sind, die senkrecht zu den Stirnflächen der Szintillatorstäbe ausgerichtet sind. Eine entsprechende Anordnung ist auch bei Szintillatorstäben mit anderer Querschnittsform, beispielsweise kreiszylindrischen Szintillatorstäben, möglich.

## Patentansprüche

1. Prozessmesssystem (100) zur radiometrischen Messung mindestens einer Prozessgröße mittels einer Messung ionisierender Strahlung mit:
einem Szintillatorstab (200, 300, 400, 500, 600, 700, 800), der eine Stirnfläche (210, 310, 410, 510, 610, 810) aufweist, die als Austrittsfläche für Szintillationslicht aus dem Szintillatorstab ausgelegt ist; und
einer Sensoreinheit (220, 320, 420, 520, 620, 820) mit mindestens einem Photosensor zur Umwandlung von aus der Stirnfläche ausgetretenem und auf eine aktive Fläche (222) der Sensoreinheit auftreffendem Szintillationslicht in elektrische Signale, wobei die aktive Fläche (222) der Sensoreinheit (220) kleiner als eine mittlere lichtführende Querschnittsfläche des Szintillatorstabs (200, 300, 400, 500, 600, 800) ist;
**dadurch gekennzeichnet, dass**
eine optische Lichtkonzentrationseinrichtung (250, 350, 450, 550, 650, 750, 850) zum Konzentrieren von Szintillationslicht in Richtung der aktiven Fläche (222) der Sensoreinheit vorgesehen ist, wobei die optische Lichtkonzentrationseinrichtung eine parabolische Lichtsammellinse (250, 350, 450) aufweist.

2. Prozessmesssystem nach Anspruch 1, **dadurch gekennzeichnet, dass** eine Mantelfläche der parabolischen Lichtsammellinse (250, 350, 450) derart gestaltet ist, dass ein maximaler Einfallswinkel Θₘₐₓ der parabolischen Lichtsammellinse an einen kritischen Winkel Θₖᵣᵢₜ der Totalreflexion innerhalb des Szintillatorstabs (200, 300, 400) derart angepasst ist, dass die Bedingung Θₘₐₓ ≥ 90° - Θₖᵣᵢₜ gilt und/oder dass die parabolische Lichtsammellinse eine Eintrittsfläche (214) mit einem Eintrittsdurchmesser d₁ und eine der aktiven Fläche zugewandte Austrittsfläche (210, 315) mit einem Austrittsdurchmesser d₂ < d₁ aufweist, wobei für ein Konzentrationsverhältnis C = d₁²/d₂² die Bedingung 1,5 < c < 5 gilt.

3. Prozessmesssystem nach einem der Ansprüche 1 oder 2, **dadurch gekennzeichnet, dass** die parabolische Lichtsammellinse (250) aus einem Szintillatormaterial besteht.

4. Prozessmesssystem nach einem der vorhergehenden Ansprüche, **dadurch gekennzeichnet, dass** ein an die Stirnfläche (210) angrenzender Endabschnitt (212) des Szintillatorstabs (200) als optische Lichtsammlungseinrichtung zum Sammeln von Szintillationslicht in Richtung der Stirnfläche (210) ausgebildet ist, wobei eine Mantelfläche des Szintillatorstabs im Endabschnitt (212) derart gestaltet ist, dass der Endabschnitt als parabolische Lichtsammellinse (250) wirkt.

5. Prozessmesssystem nach einem der vorhergehenden Ansprüche, **dadurch gekennzeichnet**, die Sensoreinheit eine aktive Fläche aufweist, die weniger als 60% der mittleren lichtführenden Querschnittsfläche des Szintillatorstabs beträgt.

6. Prozessmesssystem nach einem der vorhergehenden Ansprüche, **dadurch gekennzeichnet, dass** der Szintillatorstab (400, 700) aus mehreren Einzelstabelementen (400-1, 400-2, 700-1, 700-2) zusammengesetzt ist.

7. Prozessmesssystem nach einem der vorhergehenden Ansprüche, **dadurch gekennzeichnet, dass** der Photosensor (220) einen Silizium-Photomultiplier aufweist.

8. Prozessmesssystem nach einem der vorhergehenden Ansprüche, **dadurch gekennzeichnet, dass** das Prozessmesssystem zur Durchführung einer Gamma-Absorptionsmessung konfiguriert ist.

## Claims

1. Process measurement system (100) for radiometric measurement of at least one process variable by means of measurement of ionising radiation, comprising:
a scintillator stick (200, 300, 400, 500, 600, 700, 800) having a front surface (210, 310, 410, 510, 610, 810), configured to be an output surface for scintillation light from the scintillator stick; and
a sensor unit (220, 320, 420, 520, 620, 820) including at least one photo sensor to convert scintillation light, output from the front surface and incident on an active surface (222) of the sensor unit, into electric signals, wherein
the active surface (222) of the sensor unit (220) is smaller than an average light guiding cross-sectional area of the scintillator stick (200, 300, 400, 500, 600, 800);
**characterized in that**
an optical light concentration device (250, 350, 450, 550, 650, 750, 850) for concentrating scintillation light in the direction of the active surface (222) of the sensor unit is provided, wherein the optical light concentration device includes a parabolic light collector lens (250, 350, 450).

2. Process measurement system according to claim 1, **characterized in that** a shell surface of the parabolic light collector lens (250, 350, 450) is designed such that a maximum angle of incidence Θₘₐₓ of the parabolic light collector lens is matched to a critical angle Θₖᵣᵢₜ of the total reflection within the scintillator stick (200, 300, 400) such that the condition Θₘₐₓ ≥ 90° - Θₖᵣᵢₜ is fulfilled and/or that the parabolic light collector lens has an input surface (214) with an input diameter d₁ and an output surface (210, 315) facing the active surface with an output diameter d₂ < d₁, wherein for a concentration ratio C = d₁² / d₂² the condition 1.5 < c < 5 is fulfilled.

3. Process measurement system according to any of claims 1 or 2, **characterized in that** the parabolic light collector lens (250) is composed of a scintillator material.

4. Process measurement system according to any of the preceding claims, **characterized in that** an end portion (212) of the scintillator stick (200) adjoining the front surface (210) is configured to be an optical light collection device for collecting scintillation light in the direction of the front surface (210), wherein a shell surface of the scintillator stick in the end portion (212) is designed such that the end portion acts as a parabolic light collector lens (250).

5. Process measurement system according to any of the preceding claims, **characterized in that** the sensor unit includes an active surface which is less than 60 % of the average light guiding cross-sectional area of the scintillator stick.

6. Process measurement system according to any of the preceding claims, **characterized in that** the scintillator stick (400, 700) is composed of a plurality of individual stick elements (400-1, 400-2, 700-1, 700-2).

7. Process measurement system according to any of the preceding claims, **characterized in that** the photo sensor (220) includes a silicon photomultiplier.

8. Process measurement system according to any of the preceding claims, **characterized in that** the process measurement system is configured for carrying out a gamma absorption measurement.

## Revendications

1. Système de mesure de processus (100) destiné à la mesure radiométrique d'au moins une grandeur de processus au moyen d'une mesure de rayonnement ionisant, comprenant :
une tige de scintillateur (200, 300, 400, 500, 600, 700, 800), qui possède une surface frontale (210, 310, 410, 510, 610, 810) qui est conçue en tant que surface de sortie pour la lumière de scintillation issue de la tige de scintillateur ; et
une unité de capteur (220, 320, 420, 520, 620, 820) pourvue d'au moins un capteur photoélectrique destiné à convertir la lumière de scintillation émanant de la surface frontale et incidente sur une surface active (222) de l'unité de capteur en signaux électriques,
la surface active (222) de l'unité de capteur (220) étant plus petite qu'une aire de section transversale moyenne de guidage de lumière de la tige de scintillateur (200, 300, 400, 500, 600, 800) ;
**caractérisé en ce que**
un dispositif optique de concentration de lumière (250, 350, 450, 550, 650, 750, 850) destiné à concentrer la lumière de scintillation en direction de la surface active (222) de l'unité de capteur est présent, le dispositif optique de concentration de lumière possédant une lentille collectrice de lumière (250, 350, 450) parabolique.

2. Système de mesure de processus selon la revendication 1, **caractérisé en ce qu'**une enveloppe de la lentille collectrice de lumière (250, 350, 450) parabolique est configurée de telle sorte qu'un angle d'incidence maximal Θₘₐₓ de la lentille collectrice de lumière parabolique est adapté à un angle critique Θₖᵣᵢₜ de la réflexion totale à l'intérieur de la tige de scintillateur (200, 300, 400) de telle sorte que la condition Θₘₐₓ ≥ 90° - Θₖᵣᵢₜ est vérifiée et/ou que la lentille collectrice de lumière parabolique possède une surface d'entrée (214) ayant un diamètre d'entrée d₁ et une surface de sortie (210, 315) qui fait face à la surface active et ayant un diamètre de sortie d₂ < d₁, la condition 1,5 < c < 5 étant vérifiée pour le rapport de concentration c = d₁²/d₂².

3. Système de mesure de processus selon l'une des revendications 1 ou 2, **caractérisé en ce que** la lentille collectrice de lumière (250) parabolique se compose d'un matériau scintillateur.

4. Système de mesure de processus selon l'une des revendications précédentes, **caractérisé en ce qu'**une portion d'extrémité (212) de la tige de scintillateur (200) adjacente à la surface frontale (210) est réalisée sous la forme d'un dispositif de collecte de lumière destiné à collecter la lumière de scintillation en direction de la surface frontale (210), une enveloppe de la tige de scintillateur dans la portion d'extrémité (212) étant configurée de telle sorte que la portion d'extrémité agit comme une lentille collectrice de lumière (250) parabolique.

5. Système de mesure de processus selon l'une des revendications précédentes, **caractérisé en ce que** l'unité de capteur possède une surface active qui est égale à moins de 60 % de l'aire de section transversale moyenne de guidage de lumière de la tige de scintillateur.

6. Système de mesure de processus selon l'une des revendications précédentes, **caractérisé en ce que** la tige de scintillateur (400, 700) est constituée de plusieurs éléments formant tige individuels (400-1, 400-2, 700-1, 700-2) .

7. Système de mesure de processus selon l'une des revendications précédentes, **caractérisé en ce que** le capteur photoélectrique (220) possède un photomultiplicateur au silicium.

8. Système de mesure de processus selon l'une des revendications précédentes, **caractérisé en ce que** le système de mesure de processus est configuré pour réaliser une mesure de l'absorption de gamma.
